# EUROPEAN PATENT APPLICATION

(11) **EP 1 658 937 A1**
(43) Date of publication of application: **24.05.2006**
(21) Application number: 03818287.9
(22) Date of filing: 21.08.2003
(51) Int. Cl.: B25J 5/00, B25J 13/00

(54) **ROBOT SYSTEM AND REMOTE OPERATION SYSTEM OF ROBOT**

(71) Applicant: TMSUK Co., Ltd., Kitakyushu-shi, Fukuoka 803-0851 (JP)
(72) Inventor: Baba, Katsuyuki, c/o Tmsuk Co., Ltd., Kitakyushu-shi, Fukuoka 803-0851 (JP); Ino, Shigeaki, c/o Tmsuk Co., Ltd., Kitakyushu-shi, Fukuoka 803-0851 (JP); Takamoto, Yoichi, c/o Tmsuk Co., Ltd., Kitakyushu-shi, Fukuoka 803-0851 (JP); Motoki, Yasunari, c/o Tmsuk Co., Ltd., Kitakyushu-shi, Fukuoka 803-0851 (JP); Mori, Masao, c/o Tmsuk Co., Ltd., Kitakyushu-shi, Fukuoka 803-0851 (JP); KIDO, Keiichi, c/o Tmsuk Co., Ltd., Kitakyushu-shi, Fukuoka 803-0851 (JP); Arimura, Yuichi, c/o Tmsuk Co., Ltd., Kitakyushu-shi, Fukuoka 803-0851 (JP); Furuya, Tadayoshi, c/o Tmsuk Co., Ltd., Kitakyushu-shi, Fukuoka 803-0851 (JP); Soeda, Mitsuru, Kitakyushu-shi, Fukuoka 802-0842 (JP); Suehiro, Toshinori, Kitakyushu-shi, Fukuoka 807-0865 (JP)
(74) Representative: Hoffmann, Klaus
(86) International application number: PCT/JP2003/010578
(87) International publication number: WO 2005/018882

(57) **Abstract**

The invention provides a robot apparatus not requiring any incidental equipment in a building since an autonomous behavior is enabled, and capable of coping with abnormal phenomena. The robot apparatus includes means (112) for judging an autonomous mode or an autonomous/remote collaboration mode, means (113) for executing an autonomous motion when the mode judging means judges that the mode is an autonomous mode, means (117) for judging the collaboration ratio when the mode judging means judges that the mode is an autonomous/remote collaboration mode, means (118) for executing a complete remote motion when the judged collaboration ratio is 100% remote, and means (119) for executing an autonomous/remote collaboration motion when the judged collaboration ratio is not 100% remote.

## Description

### Technical Field

The present invention relates to a robot apparatus used for security and a robot remote control system for remotely controlling the robot apparatus.

### Background Art

Conventionally, a robot which carries out patrolling various areas of a building has been provided as the robot apparatus for security.

However, it is necessary that a conventional robot apparatus for security is guided to an elevator by communications equipment when the robot apparatus rides on a elevator, where it is necessary to provide equipment incidental to the communications equipment, etc., in respective locations in a building, thereby requiring considerable cost and a longer period of construction.

Also, if a patrolling robot apparatus can carry out not only patrolling, but also can cope with an abnormal phenomenon (for example, a fire or a suspicious person), the patrolling robot apparatus will become remarkably effective and beneficial.

Thus, in the conventional robot apparatus for security, it is required that incidental equipment is provided at respective locations in a building in order to have the robot apparatus patrol, and there is a problem in that considerable cost is required and a long period of construction is required. Further, there is still another problem in that the robot apparatus is not capable of coping with an abnormal phenomenon.

It is therefore an object of the invention to provide a robot apparatus that enables autonomous behavior, does not require any incidental equipment in a building, and is capable of coping with abnormal phenomena, and to provide a robot remote control system for remotely controlling the robot apparatus.

### Disclosure of the Invention

In order to solve the above-described problems, a robot apparatus according to the invention comprises: means for judging an autonomous mode or an autonomous/remote collaboration mode; means for executing an autonomous motion when the mode judging means judges the autonomous mode; means for judging collaboration ratio when the mode judging means judges the autonomous/remote collaboration mode; means for carrying out complete remote motion when the judged collaboration ratio is 100%, and means for executing autonomous/remote collaboration motion when the judged collaboration ratio is not 100%.

Therefore, it is possible to obtain a robot apparatus not requiring any incidental equipment and capable of coping with abnormal phenomena since the robot apparatus enables autonomous behavior.

In order to solve the above-described object, a robot remote control system comprises the above-described robot apparatus and an operation device for remotely controlling the robot apparatus, wherein the operation device includes: means for judging that the set mode is an autonomous mode or an autonomous/remote collaboration mode; means for judging the collaboration ratio in a case of the autonomous/remote collaboration mode; and means for transmittingmode data showing the judged mode and collaboration ratio data showing the judged collaboration ratio along with the operation data.

Therefore, a robot remote control system capable of remotely controlling the above-described robot apparatus can be brought about.

A robot apparatus according to a first aspect of the invention comprises: means for judging an autonomous mode or an autonomous/remote collaboration mode; means for executing an autonomous motion when the mode judging means judges the autonomous mode; means for judging the collaboration ratio when the mode judging means judges the autonomous/remote collaboration mode; means for carrying out complete remote motion when the judged collaboration ratio is 100%, and means for executing autonomous/remote collaboration motion when the judged collaboration ratio is not 100%.

With the construction described above, since the robot apparatus is capable of carrying out autonomous behavior when being set to the autonomous mode, it is not particularly necessary to additionally provide any incidental equipment in a building, and if an operation capable of coping with an abnormal phenomenon is provided in the autonomous mode, such an action can be brought about, by which the robot apparatus can cope with the specified abnormal phenomenon provided.

A robot apparatus according to a second aspect of the invention further comprises, in addition to the first aspect thereof, means for judging autonomous reset by which the mode is automatically shifted to an autonomous motion when a complete remote motion is terminated without any abnormality; and means for judging termination by which the mode is automatically shifted to an autonomous motion when an autonomous/remote collaboration motion is terminated.

With the construction described above, such an action can be brought about, by which, since the mode can be shifted to the autonomous motion if a predetermined complete remote motion or a predetermined autonomous/remote collaboration motion is terminated, the robot apparatus basically carries out an autonomous motion, and where a robot operation is required to be corrected, the mode is shifted to the autonomous/remote collaboration mode, wherein a correction operation can be carried out.

A robot apparatus according to a third aspect of the invention is a robot apparatus according to the first aspect or the second aspect thereof, wherein the autonomous motion executing means includes: means for reading an instruction; means for calculating the present coordinates; means for comparing the read instruction coordinates with the calculated present coordinates; coordinate-shifting means for controlling so that the read instruction coordinates are made coincident with the calculated present coordinate; and means for executing the read instruction.

With the construction described above, since the robot apparatus can carry out autonomous travelling, such an action can be brought about, by which any incidental equipment such as communications equipment is not required, for example, when the robot apparatus rides on an elevator.

A robot apparatus according to a fourth aspect of the invention is a robot apparatus according to the third aspect thereof, wherein the instruction executingmeans includes means for judging, on the basis of recognition of the image of a photographed subject, whether or not the photographed subject is a target subject; and means for calculating the distance to the target subject.

With the construction described above, such an action can be brought about, by which, when the robot detects anything abnormal, since a specified subject, for example, a pushbutton is recognized and the pushbutton can be operated, treatment for the abnormality can be carried out.

A robot apparatus according to a fifth aspect of the invention is a robot apparatus according to any one of the first aspect through the fourth aspect thereof, further including leg portions by which forward/backward motion and left/right turning are carried out.

With the construction described above, since the robot apparatus is capable of smoothly and quickly travelling, such an action can be brought about, by which the robot apparatus is capable of smoothly and quickly approaching target coordinates.

A robot apparatus according to a sixth aspect of the invention is a robot apparatus according to any one of the first aspect through the fifth aspect thereof, further including left and right arm portions having a plurality of degrees of freedom.

With the construction described above, since the left and right arm portions are caused to carry out flexible movement approximate to those of a human being, such an action can be brought about, by which the work range and work speed thereof can be improved. Also, since the arm portions can be folded during travelling, such an action can be brought about, by which it is possible to prevent the robot apparatus from being brought into collision with an obstacle.

A robot apparatus according to a seventh aspect of the invention is a robot apparatus according to the sixth aspect thereof, wherein the arm portions are provided with protruding fingers that can press a target such as a pushbutton.

With the construction described above, such an action can be brought about, by which a small target such as a pushbutton can easily be operated.

A robot apparatus according to an eighth aspect of the invention is a robot apparatus according to the sixth aspect or the seventh aspect thereof, wherein the arm portions are provided with opening and closing fingers that can be freely opened and closed.

With the construction described above, since the arm portions can grasp a target, such an action can be brought about, by which the work range and work speed can be improved.

A robot apparatus according to a ninth aspect of the invention is a robot apparatus according to any one of the first aspect through the eighth aspect thereof, comprising a head portion capable of turning to the left and right and tilting; a stereoscopic image camera installed at the head portion, which is capable of stereoscopically observing a subject; a fire extinguisher; and a hose having a nozzle, which is installed at the head portion and jets a fire extinguishing agent from the fire extinguisher.

With the construction described above, the robot apparatus checks a place, where a fire has broken out, by means of the stereoscopic image camera, turns the head portion to the place where a fire has broken out, and jets a fire extinguishing agent, such an action can be brought about, by which a fire extinguishing operation can be carried out.

A robot apparatus according to a tenth aspect of the invention is a robot apparatus according to any one of the first aspect through the ninth aspect thereof, further comprising a photosensor for detecting obstacles in a predetermined range or an ultrasonic sensor for detecting obstacles in a predetermined range.

With the construction described above, such an action can be brought about, by which, where any obstacle invades the predetermined range, for example, a suspicious person invades the predetermined range, the obstacle or suspicious person can be detected.

A robot remote control system according to an eleventh aspect of the invention comprises a robot apparatus according to any one of the first aspect through the tenth aspect thereof and an operation device for remotely controlling the robot apparatus, wherein the operation device includes: means for judging that the set mode is an autonomous mode or an autonomous/remote collaboration mode; means for judging the collaboration ratio in a case of the autonomous/remote collaboration mode; andmeans for transmitting mode data showing the judged mode and collaboration ratio data showing the judged collaboration ratio along with the operation data.

With the construction described above, such an action can be brought about, by which a predetermined operation mode can easily be set in the robot apparatus.

A robot remote control systemaccording to a twelfth aspect of the invention comprises a robot apparatus according to any one of the first aspect through the tenth aspect thereof and an operation device for remotely controlling the robot apparatus, wherein the operation device includes a stereoscopic image reproducing unit for reproducing a stereoscopic image, and an operation portion for displaying the status of the robot apparatus; the stereoscopic image reproducing unit includes means for receiving left and right image data transmitted from the robot apparatus, and means for displaying the received left and right image data as a stereoscopic image; and the operation portion includes means for receiving status data from the robot apparatus and means for displaying the received status data.

With the construction described above, such an action can be brought about, by which it is possible to stereoscopically display a received image, at the same time, it is possible to monitor the status of the robot apparatus, and it is possible to carry out remote control based on the received image.

### BRIEF DESCRIPTION OF THE DRAWINGS

Fig. 1 is a block diagram showing a robot apparatus according to Embodiment 1 of the invention;
Fig. 2 is a block diagram showing an operation device B according to Embodiment 1 of the invention;
Fig. 3 is a functional block diagram showing function-achieving means in the CPU of the operation device;
Fig. 4 is a flowchart showing a mode transmitting motion in the CPU of the operation device;
Fig. 5A is a functional block diagram showing function-achieving means in the operation portion of the operation device;
Fig. 5B is a functional block diagram showing function-achieving means in the stereoscopic image reproducing unit of the operation device;
Fig. 6 is a flowchart showing a display motion in the operation portion of the operation device and the stereoscopic image reproducing unit;
Fig. 7 is a flowchart showing a function-achieving means in the CPU of the robot apparatus;
Fig. 8 is a flowchart showing a mode judging operation in the CPU of the robot apparatus;
Fig. 9A is a functional block diagram showing function-achieving means in the CPU of the robot apparatus;
Fig. 9B is a functional block diagram showing function-achieving means in the CPU of the robot apparatus;
Fig. 10 is a flowchart showing an autonomous operation in the CPU of the robot apparatus;
Fig. 11A is a front elevational view showing the appearance of the robot apparatus;
Fig. 11B is a side elevational view showing the appearance of the robot apparatus;
Fig. 11C is a perspective view showing the major parts of an all-directional camera;
Fig. 12A is a front elevational view showing the interior structure of the robot apparatus;
Fig. 12B is a side elevational view showing the interior structure of the robot apparatus;
Fig. 13A is an interior structure view showing the head portion and the neck portion of the robot apparatus;
Fig. 13B is an interior structure view showing the head portion and the neck portion of the robot apparatus;
Fig. 13C is a composition view showing a three-dimensional camera (3D camera) incorporated in the head portion;
Fig. 14 is an interior structure view showing the left arm portion of the robot apparatus; and
Fig. 15 is a composition view showing the base plate of the body portion when being observed from above.

### BEST MODE FOR CARRYING OUT THE INVENTION

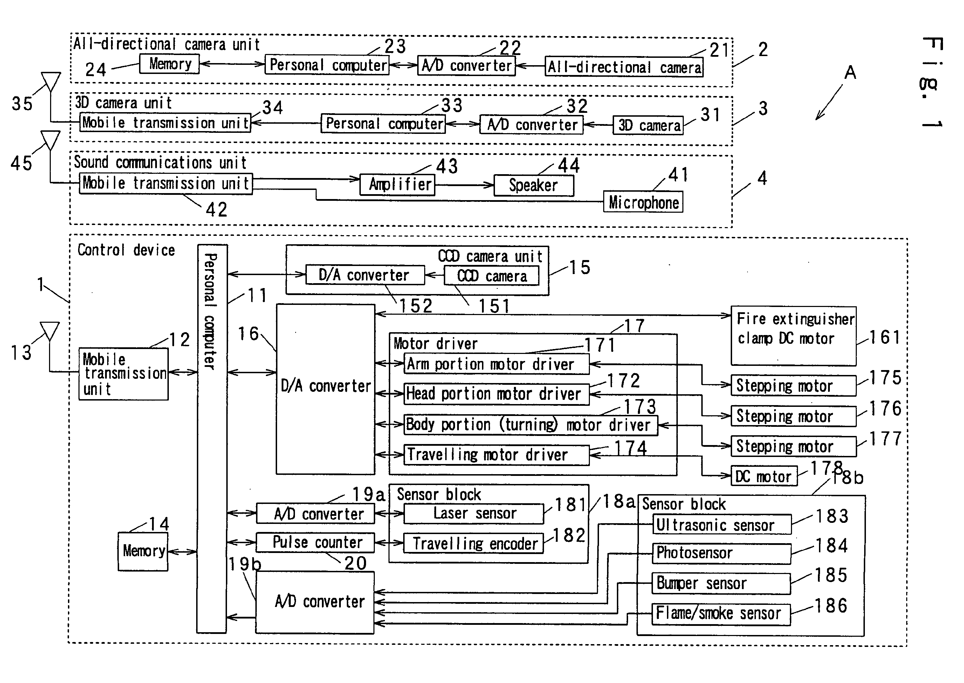

Hereinafter, a description is given of embodiments of the invention with reference to Fig. 1 through Fig. 15.

### (Embodiment 1)

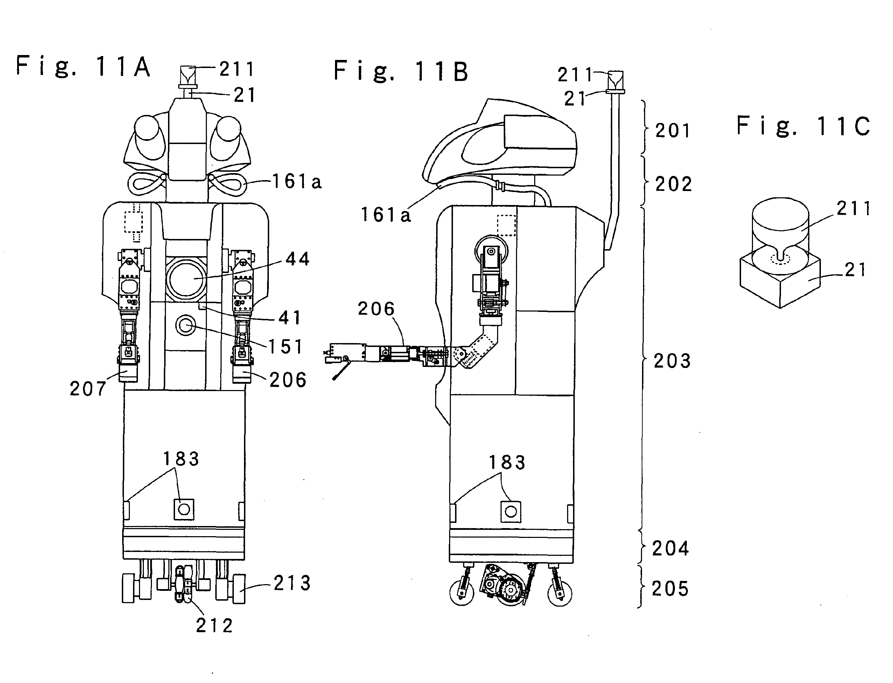

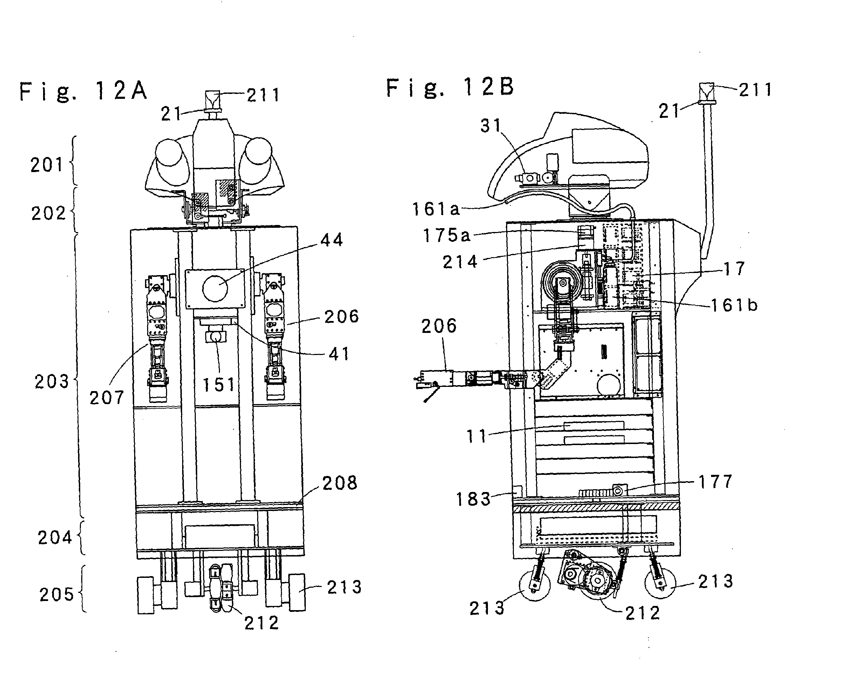

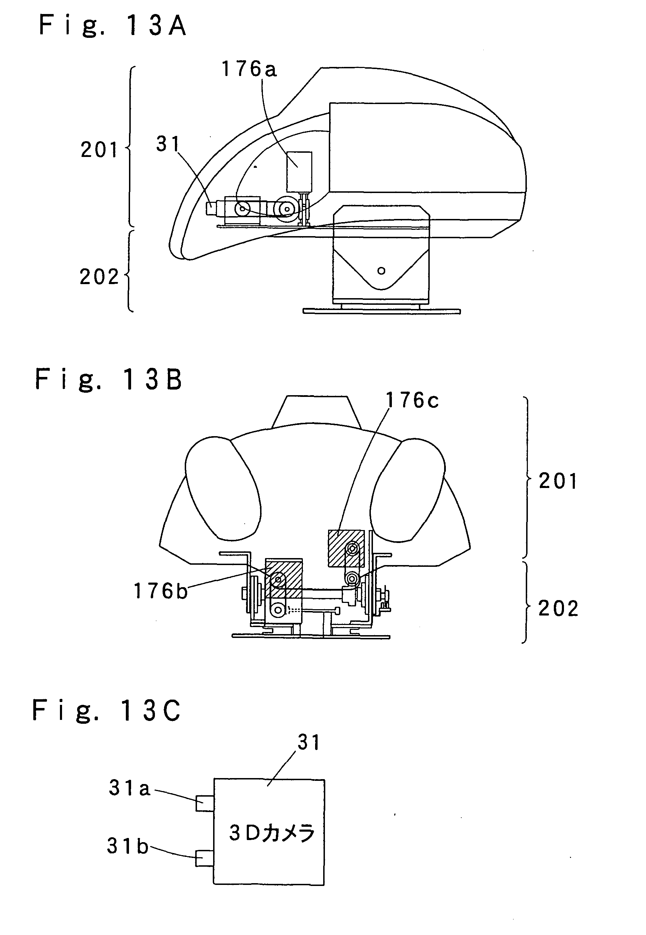

A robot apparatus according to Embodiment 1 of the invention is shown in Fig. 11 through Fig. 15. Fig. 11A is a front elevational view depicting the appearance of the robot apparatus. Fig. 11B is a side elevational view showing the appearance of the robot apparatus. Fig. 11C is a perspective view showing the maj or parts of an all-directional camera. Fig. 12A is a front elevational view showing the interior structure of the robot apparatus. Fig. 12B is a side elevational view showing the interior structure of the robot apparatus. Fig. 13A and Fig. 13B are interior composition views showing the head portion and the neck portion of the robot apparatus. Fig. 13C is a composition view showing a three-dimensional camera (3D camera) incorporated in the head portion.

In Fig. 11 through Fig. 13, reference numeral 11 denotes a personal computer of a control device described later, 17 denotes a motor driver described later, 21 denotes an all-directional camera, 31 denotes a 3-D camera, 31a denotes a right-eye lens of the 3D camera 31, 31b denotes a left-eye lens of the 3D camera 31, 41 denotes a microphone, 44 denotes a speaker, 151 denotes a CCD camera, 161a denotes a hose with a nozzle, 161b denotes a fire extinguisher, 175a denotes a stepping motor for rotating the entire left arm, 176a denotes a stepping motor for vertically moving (tilting) the 3D camera 31, 176b denotes a stepping motor for vertically moving (tilting) the head portion described later, 176c denotes a stepping motor for turning the head portion described later leftward and rightward, 177 denotes a stepping motor for turning the waist portion described later, 183 denotes an ultrasonic sensor, 201 denotes the head portion, 202 denotes the neck portion, 203 denotes the body portion, 204 denotes the waist portion, 205 denotes the leg portion, 206 denotes the left arm portion, 207 denotes the right arm portion, 208 denotes a base plate of the body portion 203, 211 denotes a semi-spherical mirror surface for picking up images in all directions in the camera 21, 212 denotes a drive wheel, and 213 denotes driven wheels.

In Fig. 11 and Fig. 12, the all-directional camera 21 is disposed to cause its camera lens to be opposed to the mirror surface 211, and is capable of picking subjects in all the directions by means of the mirror surface 211. Also, the 3D camera 31 is capable of stereoscopically grasping the subjects by the right-eye lens 31a and the left-eye lens 31b. In addition, the wheels 212 and 213 impact movement to the robot apparatus, by which the robot apparatus is caused to go straight, move backward, and turn leftward and rightward (including rotations of the apparatus itself).

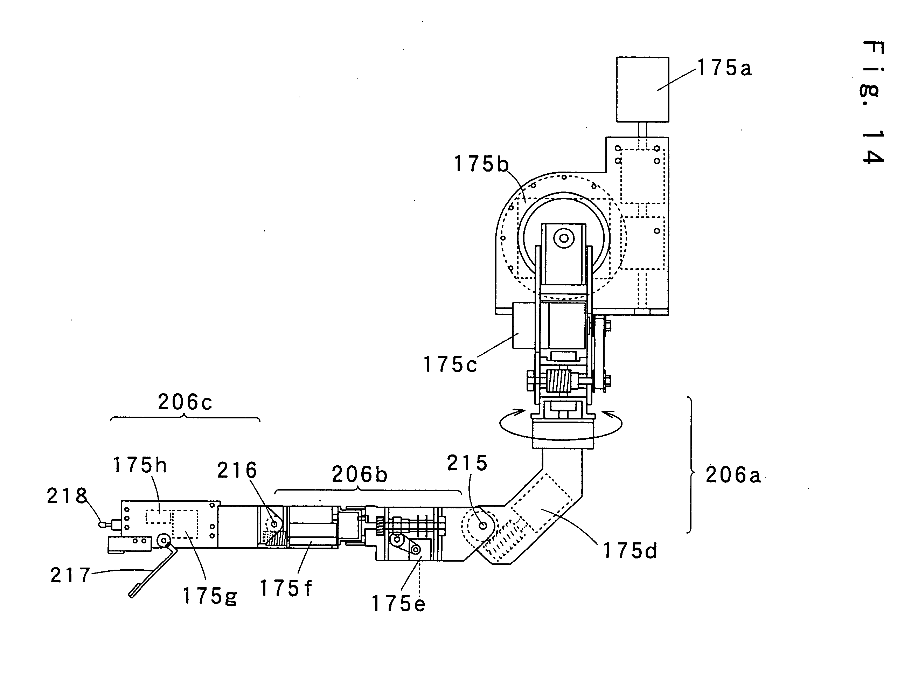

Next, a description is given of the arm portion using Fig. 14. Fig. 14 is an interior structure view showing the left arm portion of the robot apparatus. Also, the right arm portion is symmetrical to the left arm portion in the left and right direction.

In Fig. 14, reference numeral 175a denotes a stepping motor for rotating the entire arm, 175b denotes a stepping motor for turning the entire arm leftward and rightward, 175c denotes a stepping motor for rotating the upper arm 206a, 175d denotes a stepping motor for vertically turning the lower arm 206b around a turning axis 215, 175e denotes a stepping motor for rotating the lower arm 206b, 175f denotes a stepping motor for vertically turning the wrist portion 206c around a turning axis 216, 175g denotes a steppingmotor for opening and closing opening/closing fingers 217, and 175h denotes a stepping motor for advancing and retreating the protruding finger 218.

Thus, the arm portion 206 is capable of executing free movement based on the stepping motors 175a through 175f.

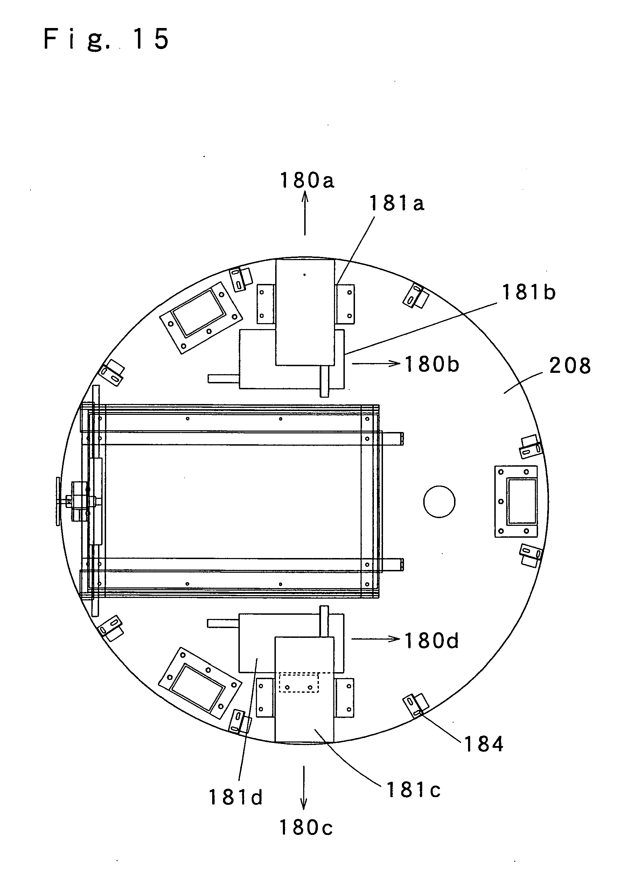

Next, a description is given of the base plate 208 of the body portion 203 using Fig. 15. Fig. 15 is a composition view showing the base plate 208 of the body portion 203 when being observed from above.

In Fig. 15, reference numerals 181a through 181d denote laser sensors for emitting laser beams 180a through 180d and receiving the reflected light thereof. The laser sensors 181a through 181d are those for measuring the distance to walls, etc. It is possible to calculate the present coordinates of a robot apparatus based on the distance data of the laser sensors 181a through 181d and the travelling distance data of a travelling encoder described later.

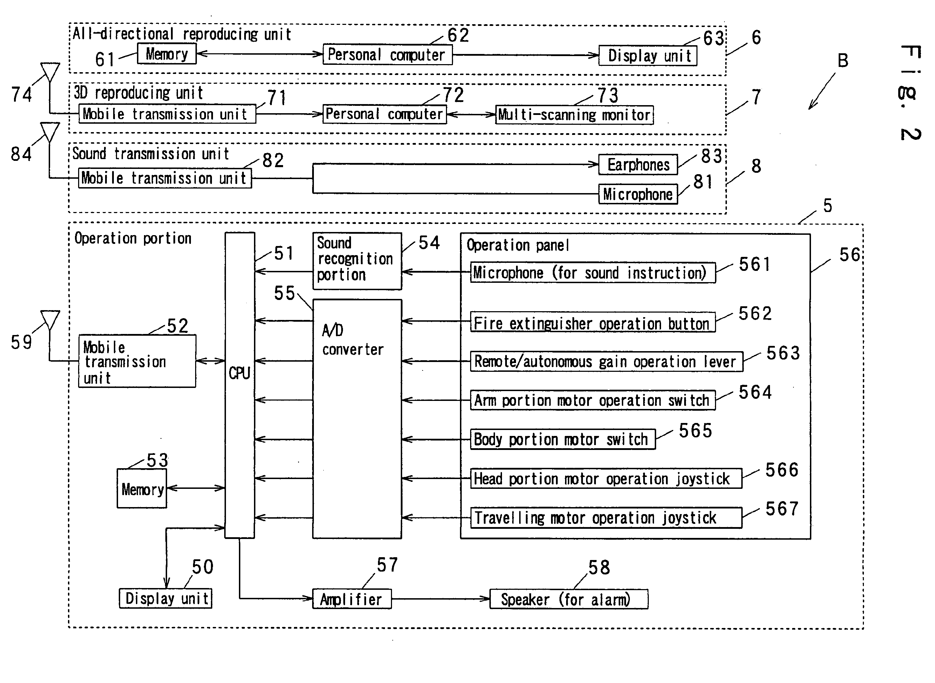

Fig. 1 is a block diagram showing the robot apparatus A according to Embodiment 1 of the invention. Fig. 2 is a block diagram showing the operation device B according to Embodiment 1 of the invention. The robot apparatus A and the operation device B are able to communicate with each other via a mobile transmission unit such as PHS, mobile telephone, and a wireless LAN, etc.

In the robot apparatus A in Fig. 1, reference numeral 1 denotes a control device, 2 denotes an all-directional camera unit, 3 denotes a 3D camera unit, and 4 denotes a sound communications unit.

The control device 1 includes a personal computer 11 for controlling drive of respective portions, into which data from respective sensors are inputted, a mobile transmission unit 12 such as a PHS, an antenna 13, a memory 14, a CCD camera unit 15 for recognizing an image of a subject and measuring the distance to the subject, a D/A converter 16, motor drivers 17 for driving respective motors, sensor blocks 18a and 18b for outputting respective detection signals, A/D converters 19a and 19b for converting analog signals from the sensor blocks 18a and 18b to digital data, a pulse counter 20 for counting pulses from the travelling encoder and measuring the travelling distance, a fire extinguisher clamp DC motor 161 driven by the D/A converter 16, stepping motors 175, 176 and 177 for driving arm portions 206 and 207, a head portion 201, and a body portion 203, and a DC motor 178 for driving a leg portion 205. Also, the motor driver 17 includes an arm portion motor driver 171 for driving the stepping motors of the arm portions 206 and 207, a head portion motor driver 172 for driving the stepping motor of the head portion 201 and the neck portion 202, a body portion motor driver 173 for driving the stepping motor of the body portion 203, and a travelling motor driver 174 for driving the DC motor of the leg portion 205. The sensor blocks 18a and 18b include a laser sensor 181 for measuring the distance to walls, etc., a travelling encoder 182 for measuring the travelling distance, an ultrasonic sensor 183 for detecting the presence of an obstacle (including a suspicious person) within a predetermined range, a photosensor 184 for detecting the presence of an obstacle (including a suspicious person) within a predetermined range as well, a bumper sensor 185 for judging whether or not the waist portion 204 is brought into collision with any obstacle, and a flame and smoke sensor 186 for detecting flames and smoke.

The all-directional camera unit 2 includes an all-directional camera 21 for picking up a subject in all directions, an A/D converter 22 for converting analog image signals outputted by the all-directional camera 21 into digital image data, a personal computer 23 for taking in the digital image data from the A/D converter 22, and a memory 24 for storing the digital image data taken in by the personal computer 23. In addition, the 3D camera unit 3 includes a 3D camera 31 for stereoscopically picking up a subject by means of the left-eye lens 31a and the right-eye lens 31b and for outputting stereoscopic image signals consisting of the left image signals and right image signals, an A/D converter 32 for converting analog image signals from the 3D camera 31 into digital image data, a personal computer 33 for taking in the digital image data from the A/D converter 32, and a mobile transmission unit 34 for transmitting the digital image data from the personal computer 33 via an antenna 35. Further, the sound communications unit 4 includes a microphone 41, a mobile transmission unit 42 for transmitting sound signals from the microphone 41 via an antenna 45, an amplifier 43 for amplifying and outputting sound signals received by the mobile transmission unit 42, and a speaker 44 for outputting the sound signals from the amplifier 43 as sound.

In addition, in Fig. 2, reference numeral 5 denotes an operation portion, 6 denotes an all-directional reproducing unit for reproducing images stored by the all-directional camera unit 2 of the robot apparatus A, 7 denotes a 3D reproducing unit for reproducing stereoscopic image signals received from the 3D camera unit 3 of the robot apparatus A via an antenna 74, and 8 denotes a sound communications unit.

The operation portion 5 includes a display unit 50, a CPU 51 for outputting instruction signals, amobile transmission unit 52 for carrying out transmission and receiving via an antenna 59, a memory 53 for storing various types of data, a sound recognition portion 54 for recognizing sound, an A/D converter 55, an operation panel 56, an amplifier 57, and a speaker 58. The operation panel 56 includes a microphone 561 for outputting commands (instructions) as sound signals, a fire extinguisher operation button 562 for operating a fire extinguisher 161b, a remote/autonomous gain operation lever 563 for switching a remote control operation and an autonomous motion, an arm portion motor operation switch 564 for controlling the stepping motor 175 of the arm portions 206 and 207, a body portion motor switch 565 for controlling the stepping motor 177 of the body portion 203, a head portion motor operation joystick 566 for controlling the stepping motor 176 of the head portion 201 and the neck portion 202, and a travelling motor operation joystick 567 for controlling the DC motor 178 of the leg portion 205.

The all-directional reproducing unit 6 includes a memory 61 for storing all-directional image data, a personal computer 62 for reproducing all-directional image data stored in the memory 61, and a display unit 63 for displaying the all-directional image data from the personal computer 62 as images. The 3D reproducing unit 7 includes a mobile transmission unit 71 for outputting stereoscopic image signals received from the 3D camera unit 3 via an antenna 74, a personal computer 72 for taking in stereoscopic image signals from the mobile transmission unit 71, and a multi-scanning monitor 73 for displaying the stereoscopic image data from the personal computer 72 as stereoscopic images. Also, stereoscopic image observation eyeglasses are required in order to stereoscopically observe a stereoscopic image displayed in the multi-scanning monitor 73. The sound communications unit 8 includes a microphone 81 for outputting sound signals, a mobile transmission unit 82 for transmitting sound signals from the microphone 81 via an antenna 84, and earphones 83 for outputting sound signals received and outputted by the mobile transmission unit 82 as sounds.

A description is given of operation of a robot remote control system thus constructed.

First, a description is given of the outline of the operation. Instructions shown in Table 1 are outputted from the operation panel 56 of the operation device B as instruction signals.

In Table 1, a reference posture instruction of the left and right arm portions 206 and 207 is a command for bending the left and right arm portions 206 and 207 inwardly by the rotation axis 251 corresponding to an elbow of a human being, and for driving the respective stepping motors so that the entire arm portion is located at an innermost position. Thereby, it is possible to prevent an adverse effect from occurring, for example, to prevent the robot apparatus A being brought into collision with an obstacle during travelling. A fire extinguisher lock canceling instruction is a command by which a locked fire extinguisher is unlocked, and a fire extinguisher jetting instruction is a command by which the fire extinguisher 161b is entered into a jetting state by driving the fire extinguisher clamp DC motor 161, whereby a fire extinguishing liquid is jetted from a hose 161a having a nozzle. In addition, ON and OFF instructions turn on and off the power supply.

As shown in Table 2 based on the instructions described in Table 1, stepping motors and a DC motor are driven. For example, when an instruction signal for vertically elevating and lowering the 3D camera is received, the 3D camera 31 is vertically driven, and the camera inclination angle is controlled to a predetermined angle. Instruction signals for vertical movement and left or right movement of the neck control the head portion 201 vertically (that is, upward or downward), leftward or rightward.

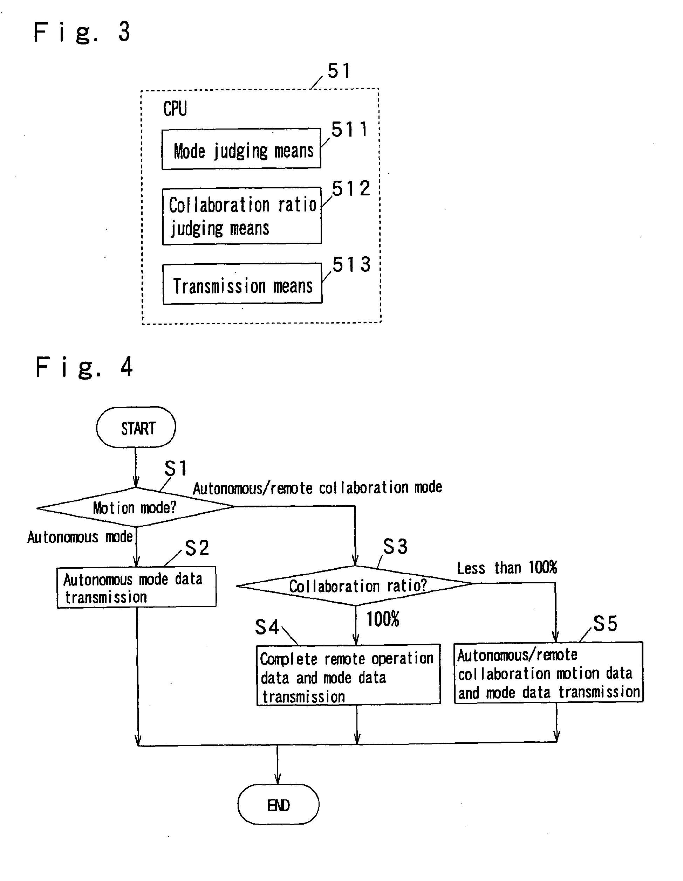

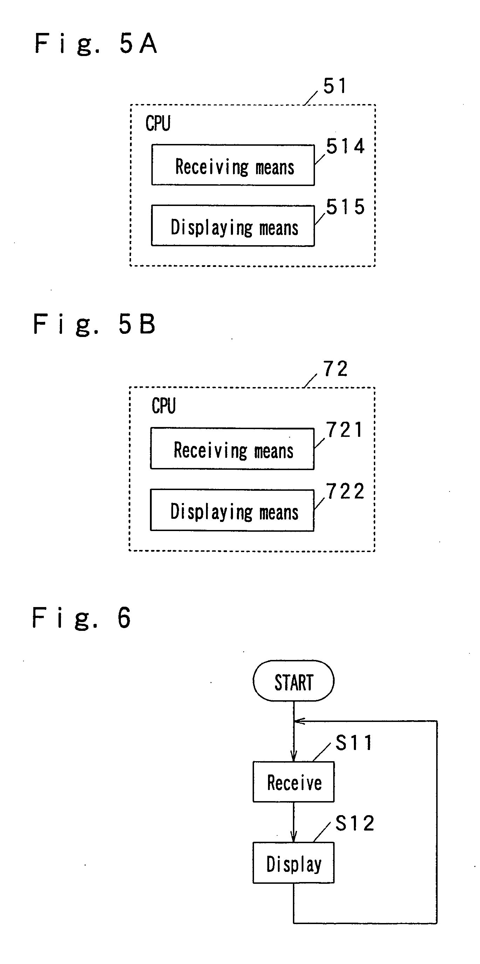

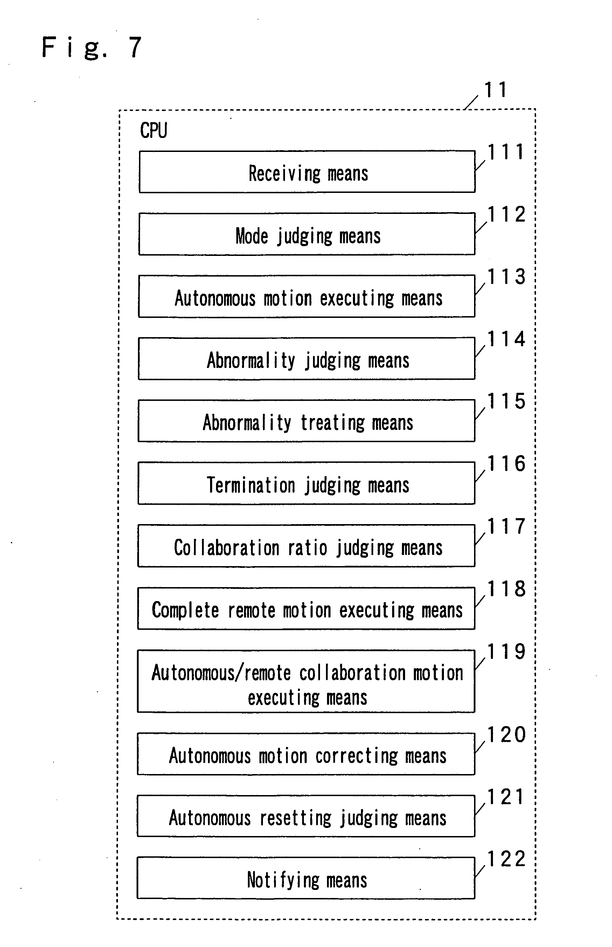

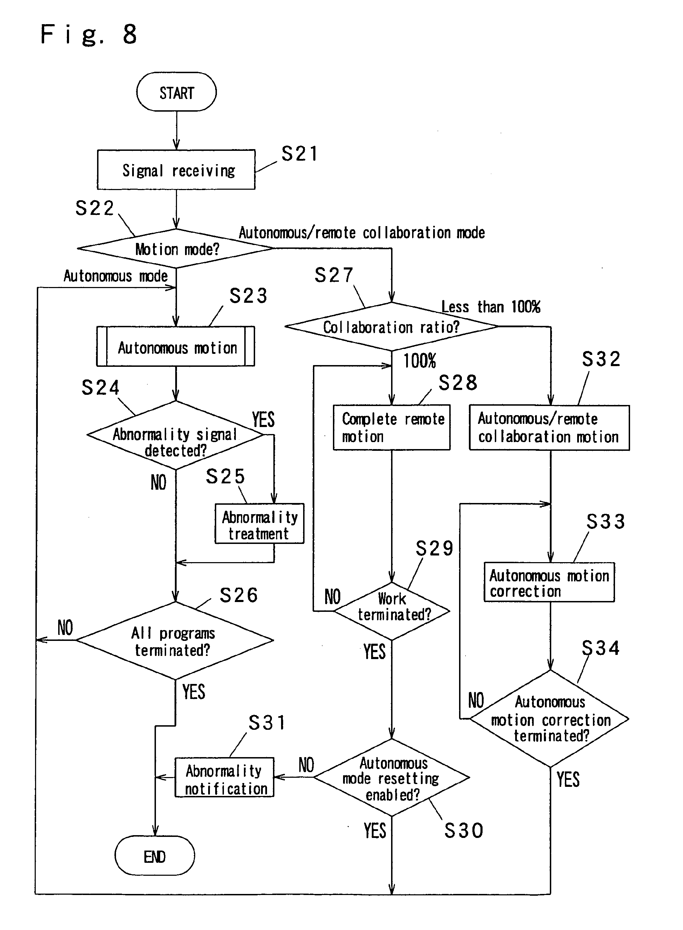

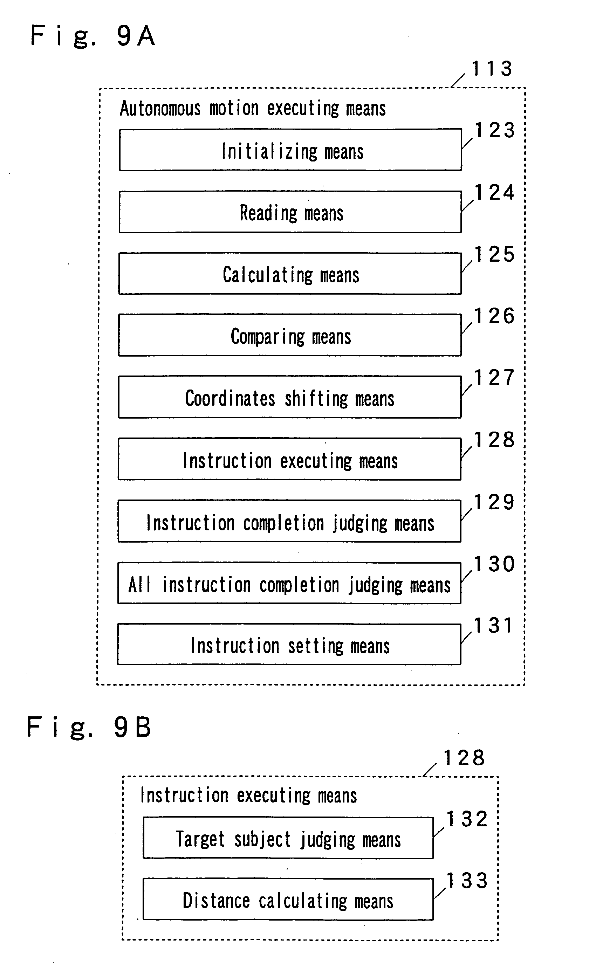

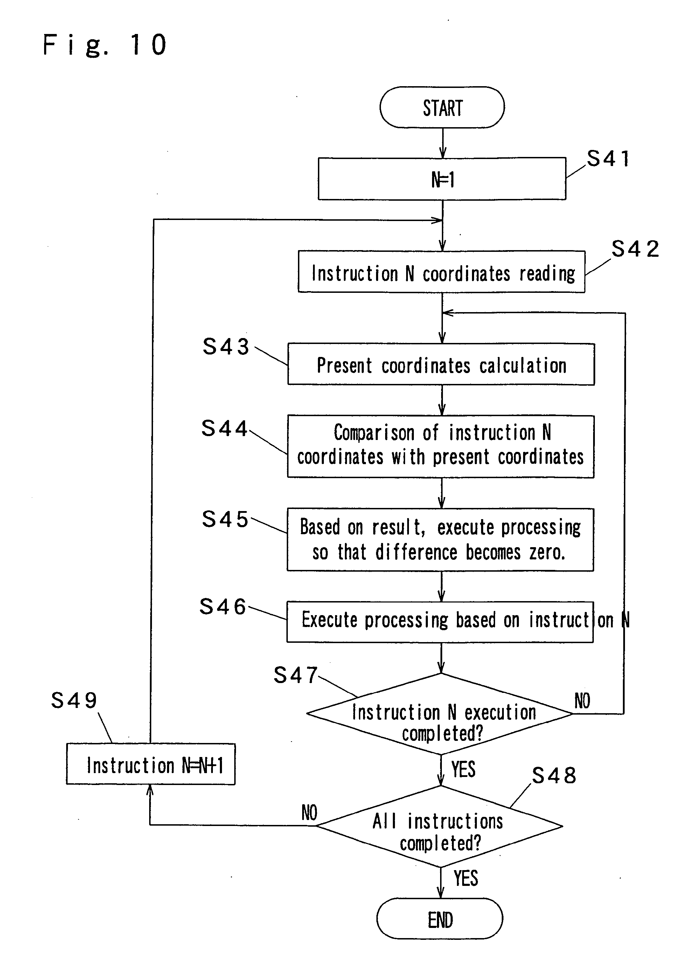

Next, a description is given of movement of the robot apparatus A of Fig. 1 and the operation device B of Fig. 2, using Fig. 3 through Fig. 10. Fig. 3 is a functional block diagram showing function-achieving means in the CPU 51 of the operation device B. Fig. 4 is a flowchart showing a mode transmitting motion in the CPU 51 of the operation device B. Fig. 5A is a functional block diagram showing function-achieving means in the CPU 51 of the operation device B. Fig. 5B is a functional block diagram showing function-achieving means in the CPU 72 of the operation device B. Fig. 6 is a flowchart showing display motions in the CPU 51 and CPU 72 of the operation device B. Fig. 7, Fig. 9A and Fig. 9B are functional block diagrams showing function-achieving means in the CPU 11 of the robot apparatus A. Fig. 8 is a flowchart showing a mode judging operation in the CPU 11 of the robot apparatus A. Fig. 10 is a flowchart showing an autonomous operation in the CPU 11 of the robot apparatus A.

A description is given of the function-achieving means of the CPU 51 of Fig. 2. In Fig. 3 and Fig. 5, reference numeral 511 denotes mode judging means for judging a set operation mode, 512 denotes collaboration ratio judging means for judging the collaboration ratio in the autonomous/remote collaboration mode, 513 denotes means for transmitting data to the robot apparatus A, 514 denotes means for receiving data from the robot apparatus A, 515 denotes display judging means for judging the type of display, and 516 denotes means for causing a display unit 50 to display data.

With respect to the operation device B thus constructed, a description is given of mode transmitting motions of Fig. 4 and display motions of Fig. 6.

First, the mode transmitting motions are described. In Fig. 4, the mode judging means 511 judges whether the motion mode is an autonomous mode or an autonomous/remote collaboration mode (S1). The motion mode is established by the remote/autonomous gain operation lever 563. That is, setting position data of the remote/autonomous gain operation lever 563 is inputted into the CPU 51 via the A/D converter 55, and the mode judging means 511 judges the mode on the basis of the setting position data. When the mode judging means 511 judges that the mode is an autonomous mode, the transmitting means 513 transmits mode data showing the autonomous mode to the robot apparatus A (S2). When the mode judging means 511 judges that the mode is an autonomous collaboration mode, next, the collaboration ratio judging means 512 judges the collaboration ratio between the autonomous mode and the remote mode (S3). Where the autonomous/remote collaboration ratio is 100% remote, the transmitting means 513 transmits complete remote control data and complete remote mode data (S4), and where the autonomous/remote collaboration ratio is not 100% remote, the transmitting means 513 transmits the autonomous/remote collaboration control data and autonomous/remote collaboration mode data (S5).

Next, a display motion is described below. First, a description is given of a displaying motion in the CPU 51. In Fig. 6, the receiving means 514 receives status data of the robot apparatus, which is received by the mobile transmission unit 52 via the antenna 59 (S11), and the displaying means 515 displays the received status data of the robot apparatus on the display unit 50 (S12).

Next, a description is given of a displaying motion in the CPU 72. In Fig. 6, the receiving means 721 takes in the left and right transmission image data from the robot apparatus A, which is received by the mobile transmission unit 81 via the antenna 74 (S11), and the displaying means 722 causes the multi-scanning monitor 73 to display the received left and right image transmission data as a stereoscopic image (S12). To observe the stereoscopic image displayed on the multi-scanning monitor 73, eyeglasses for observing a stereoscopic image are required.

A description is given of function-achieving means of the CPU 11 of Fig. 1. In Fig. 7 and Fig. 9, reference numeral 111 denotes means for receiving data from the operation device B, 112 denotes means for judging a motion mode, 113 denotes means for executing an autonomous motion, 114 denotes means for judging the presence of an abnormality, 115 denotes means for treating an abnormality, 116 denotes termination judging means for judging whether or not a predetermined treatment or work is terminated, 117 denotes means for judging the collaboration ratio in the autonomous/remote collaboration mode, 118 denotes means for executing a complete remote motion, 119 denotes means for executing an autonomous/remote collaboration motion, 120 denotes means for correcting an autonomous motion, 121 denotes means for judging whether or not resetting to the autonomous mode is enabled, 122 denotes means for notifying an abnormality, etc., 123 denotes means for executing initialization, 124 denotes means for reading data from the memory 53, 125 denotes means for calculating coordinates, etc., 126 denotes means for executing comparison of data, 127 denotes coordinates shifting means for carrying out shift to target coordinates, 128 denotes means for executing a set instruction, 129 denotes means for judging whether or not execution of the set instruction is completed, 130 denotes means for judging whether or not execution of all the instructions is completed, 131 denotes means for setting an instruction, 132 denotes means for judging whether or not a picked-up subject is a target subject, and 133 denotes means for calculating the distance to the target subject.

With respect to the robot apparatus A thus constructed, a description is given of a mode judgement executing motion of Fig. 8 and an autonomous motion of Fig. 10.

First, the mode judgement executing motion is described below. In Fig. 8, the receiving means 111 takes in transmission data from the operation device B, which is received by the mobile transmission unit 12 via the antenna 13 (S21). The mode judging means 112 judges, based on the taken-in received data, whether the mode is an autonomous mode or an autonomous/remote collaboration mode (S22). That is, where the received data includes autonomous mode data or autonomous/remote collaboration mode data, the mode is judged to be an autonomous mode or an autonomous/remote collaboration mode, and where the received data does not include any mode data, the mode is judged to be an autonomous mode. Next, where the mode judging means 112 judges that the mode is an autonomous mode, the autonomous motion executing means 113 carries out an autonomous motion (described later) as in Fig. 10 (S23). The abnormality judging means 114 judges the presence of any abnormality (the means judges an abnormality when detecting an abnormality signal indicating an abnormality, and judges to be normal when not detecting the abnormality signal) (S24). If there is any abnormality, the abnormality treating means 115 carries out abnormality treatment (S25). When being normal or after the abnormality treatment is carried out, the termination judging means 116 judges whether or not the autonomous related motions (motions in Step S23 through Step S25) are terminated (S26). If not terminated, the process shifts to Step S23, and if terminated, the treatment is then terminated.

Where the autonomous/remote collaboration mode is judged in Step S22, next, the collaboration ratio judging means 117 judges the autonomous/remote collaboration ratio (S27). Where it is judged that the ratio is 100% remote, the complete remote motion executing means 118 carries out a complete remote motion (S28). Next, the termination judging means 116 judges whether or not the complete remote motion (complete remote operation) is terminated (S29). If terminated, next, the automatic resetting judging means 121 judges whether or not the autonomous resetting is enabled by the complete remote operation (S30). Where it is judged that resetting to the autonomous mode is enabled, the process returns to Step S23, and where it is judged that resetting to the autonomous mode is not enabled, the notifying means 122 notifies the robot apparatus A and the operation device B of an abnormality (S31), and this process is terminated. In Step S27, where it is judged that the collaboration ratio is not 100% remote, the autonomous/remote collaboration motion executing means 119 carries out an autonomous/remote collaboration motion (S32), and the autonomous motion correcting means 120 corrects an autonomous motion (S33). Next, the termination judging means 116 judges whether or not correction of autonomous motion is terminated (S34). If not terminated, the process returns to Step S33, and if terminated, the process returns to Step S23.

Next, an autonomous motion is described below. In Fig. 10, the initializing means 123 initializes to N=1 (S41). The reading means 124 reads the coordinates of an instruction N from the memory 14 (S42), and the calculating means calculates the present coordinates (S43). The present coordinates are calculated by measuring the distance from a wall surface, etc., by means of the laser sensor 181 and calculates the distance by means of the travelling encoder 182. Next, the comparing means 126 compares the coordinates of the instruction N and the present coordinates (S44). The coordinates shifting means 127 controls the travelling motor driver 174 and the DC motor 178 based on the result (difference between the coordinates of the instruction N and the present coordinates) of comparison by the comparing means 126, and controls so that the coordinates of the instruction N and the present coordinates are made coincident with each other (S45). Next, the instruction executing means 128 carries out a process based on the instruction N (S46). Next, the instruction completion judging means 129 judges whether or not execution of the instruction N is completed (S47). If not completed, the process returns to Step S43, and if completed, next, the all-instruction completion judging means 130 judges whether or not all the instructions are completed (S48). If not completed, next, the instruction setting means 131 reads a next instruction from the memory 14 (S49). If completed, the process is terminated.

Herein, one example of the instruction executing means 128 is shown in Fig. 9B. In Fig. 9B, the target subject judging means 132 judges, based on recognition of a subject image picked by the CCD camera unit 15, whether or not a subject is the target subject, and the distance calculating means 133 calculates the distance to the target subject based on the above-described subject image data.

As described above, according to the embodiment, since the robot apparatus is provided with means 112 for judging whether the mode is an autonomous mode or an autonomous/remote collaboration mode, means 113 for executing an autonomous motion when the mode judging means 112 judges that the mode is an autonomous mode, means 117 for judging the collaboration ratio when the mode judging means 112 judges that the mode is an autonomous/remote collaboration mode, means 118 for executing a complete remote motion when the judged collaboration ratio is 100% remote, and means 119 for executing an autonomous/remote collaboration motion when the judged collaboration ratio is not 100% remote, the robot apparatus A can carry out an autonomous motion when being set to the autonomous mode. Therefore, it is not particularly necessary to additionally prepare any incidental equipment, and if a feature which is capable of coping with an abnormal phenomenon in the autonomous mode is equipped, it becomes possible to cope with a specified abnormal phenomenon according to the equipped feature.

In addition, since the robot apparatus A according to the embodiment is provided with automatic resetting judging means 121 for automatically shifting to the autonomous mode when a complete remote motion is terminated without any abnormality, and termination judging means 116 for automatically shifting to the autonomous mode when an autonomous/remote collaboration motion is terminated, it is possible to shift to the autonomous motion if a predetermined complete remote motion or a predetermined autonomous/remote collaboration motion is terminated. Therefore, the robot apparatus A basically carries out an autonomous motion, wherein where it is necessary to correct the robot motion, it is possible to carry out a correction operation by shifting to the autonomous/remote collaboration mode.

Further, since the autonomous motion executing means 113 is provided with means 124 for reading an instruction, means 125 for calculating the present coordinates, means 126 for comparing the coordinates of the read instruction and the calculated present coordinates with each other, means 127 for shifting to coordinates, which controls so that the coordinates of the read instruction and the calculated present coordinates are made coincident with each other, and means 128 for executing the read instruction, it is possible for the robot apparatus A to carry out autonomous travelling. Therefore, it is not necessary to prepare any incidental equipment such as communications equipment, for example, when riding on an elevator.

Still further, since the instruction executing means 128 is provided with means 132 for judging, by recognizing the subject image, whether or not the picked-up subject is a target subject, andmeans 133 for calculating the distance to the target subject, it is possible to recognize a specified subject, for example, a pushbutton, when detecting anything abnormal, and to operate the pushbutton. Therefore, it is possible to execute treatment for the abnormality.

Also, since the robot apparatus A is provided with the leg portion 205 which enables forward/backward motion and left/right turning, it is possible to carry out smooth and quick travelling, wherein it is possible to smoothly and quickly approach the target coordinates.

In addition, since the robot apparatus A is provided with left and right arm portions 206 and 207 having a plurality of degrees of freedom, it is possible to cause the left and right arm portions of the robot apparatus A to execute flexible movement very close to both arms of a human being. Therefore, the work range and work speed can be improved. Also, the arm portions 206 and 207 are folded during travelling, wherein it is possible to prevent an accident such as a collision with an obstacle from occurring.

Furthermore, since the arm portions 206 and 207 are provided with protruding fingers 218 capable of pressing a target such as a pushbutton, it is possible to easily operate a small target such as a pushbutton, etc.

Still further, since the arm portions 206 and 207 are provided with fingers 217 which can be opened and closed, the arm portions 206 and 207 can grasp a target, wherein the work range and work speed can be improved.

In addition, since the robot apparatus A is provided with the head portion 201 capable of turning leftward and rightward and controlling its inclination, a stereoscopic image camera 31 which is incorporated in the head portion 201 and is capable of stereoscopically observing a subject, a fire extinguisher 161b, and a hose 161a having a nozzle, which is disposed at the head portion 201 and jets a fire extinguishing agent from the fire extinguisher 161b via the nozzle, the robot apparatus A checks a place, where a fire has broken out, by means of the stereoscopic image camera 31, turns the head portion 201 in the direction of the place of the fire and carries out fire extinguishing work by jetting the fire extinguishing agent.

Also, since a photosensor 184 for detecting an obstacle in a predetermined range or an ultrasonic sensor 183 for detecting an obstacle in a predetermined range is provided, it is possible to detect an obstacle or a suspicious person when the obstacle invades the predetermined range, for example, a suspicious person invades the predetermined range.

In addition, in a robot remote control system including any one of the robot apparatuses described above and an operation device for remotely controlling the robot apparatus, since the operation device B includes means 511 for judging whether the set mode is an autonomous mode or an autonomous/remote collaboration mode, means 512 for judging the collaboration ratio where the mode is an autonomous/remote collaborationmode, and means 513 for transmitting the mode data showing the judged mode and the collaboration ratio data showing the judged collaboration ratio along with the operation data, a predetermined motion mode can easily be set to the robot apparatus A.

Further, in a robot remote control system including any one of the robot apparatuses described above and an operation device for remote controlling the robot apparatus, the operation device B is provided with a stereoscopic image reproducing unit 7 for reproducing a stereoscopic image, and an operation portion 5 for displaying the status of the robot apparatus A. And, the stereoscopic image reproducing unit 7 includes means 721 for receiving left and right transmission image data from the robot apparatus A and means 722 for displaying the received left and right image data as stereoscopic images. The operation portion 5 includes means 514 for receiving status data from the robot apparatus A and means 515 for displaying the received status data. Therefore, the received images can be stereoscopically displayed and the status of the robot apparatus A can be monitored. In addition, remote control can be carried out based on the received images.

### Industrial Applicability

As described above, a robot apparatus according to Claim 1 comprises: means for judging an autonomous mode or an autonomous/remote collaboration mode; means for executing an autonomous motion when the mode judging means judges the autonomous mode; means for judging the collaboration ratio when the mode judging means judges the autonomous/remote collaboration mode; means for carrying out complete remote motion when the judged collaboration ratio is 100%, and means for executing autonomous/remote collaboration when the judged collaboration ratio is not 100%. Therefore, since the robot apparatus is capable of carrying out autonomous motions when being set to the autonomous mode, it is not particularly necessary to additionally provide any incidental equipment in a building, and if an operation capable of coping with an abnormal phenomenon is provided in the autonomous mode, such an advantageous effect can be brought about, by which the robot apparatus can cope with the specified abnormal phenomenon provided.

A robot apparatus according to Claim 2 further comprises: in addition to the robot apparatus according to Claim 1, means for judging autonomous reset by which the mode is automatically shifted to an autonomous motion when a complete remote motion is terminated without any abnormality; and means for judging termination by which the mode is automatically shifted to an autonomous motion when an autonomous/remote collaboration motion is terminated. Therefore, such an advantageous effect can be brought about, by which, since the mode can be shifted to the autonomous motion if a predetermined complete remote motion or a predetermined autonomous/remote collaboration motion is terminated, the robot apparatus basically carries out an autonomous motion, and where a robot operation is required to be corrected, the mode is shifted to the autonomous/remote collaboration mode, wherein a correction operation can be carried out.

A robot apparatus according to Claim 3 is a robot apparatus according to Claim 1 or 2, wherein the autonomous motion executing means includes: means for reading an instruction; means for calculating the present coordinates; means for comparing the read instruction coordinates with the present coordinates; coordinate-shifting means for controlling so that the read instruction coordinates are made coincident with the calculated present coordinate; and means for executing the read instruction. Therefore, since the robot apparatus can carry out autonomous travelling, such an advantageous effect can be brought about, by which any incidental equipment such as communications equipment is not required, for example, when the robot apparatus rides on an elevator.

A robot apparatus according to Claim 4 is a robot apparatus according to Claim 3, wherein the instruction executing means includes means for judging, on the basis of recognition of the image of a photographed subject, whether or not the photographed subject is a target subject; and means for calculating the distance to the target subject. Therefore, such an advantageous effect can be brought about, by which, when the robot detects anything abnormal, since a specified subject, for example, a pushbutton is recognized and the pushbutton can be operated, treatment for the abnormality can be carried out.

A robot apparatus according to Claim 5 is a robot apparatus according to any one of Claims 1 through 4, further including leg portions by which forward/backward motion and left/right turning are carried out. Therefore, since the robot apparatus is capable of smoothly and quickly travelling, such an advantageous effect can be brought about, by which the robot apparatus is capable of smoothly and quickly approaching target coordinates.

A robot apparatus according to Claim 6 is a robot apparatus according to any one of Claims 1 through 5, further including left and right arm portions having a plurality of degrees of freedom. Therefore, since the left and right arm portions are caused to carry out flexible movement approximate to those of a human being, such an advantageous effect can be brought about, by which the work range and work speed thereof can be improved. Also, since the arm portions can be folded during travelling, such an advantageous effect can be brought about, by which it is possible to prevent the robot apparatus from being brought into collision with an obstacle.

A robot apparatus according to Claim 7 is a robot apparatus according to Claim 6, wherein the arm portions are provided with protruding fingers that can press a target such as a pushbutton. Therefore, such an advantageous effect can be brought about, by which a small target such as a pushbutton can easily be operated.

A robot apparatus according to Claim 8 is a robot apparatus according to Claim 6 or 7, wherein the arm portions are provided with opening and closing fingers that can be freely opened and closed. Therefore, since the arm portions can grasp a target, such an advantageous effect can be brought about, by which the work range and work speed can be improved.

A robot apparatus according to Claim 9 is a robot apparatus according to any one of Claims 1 through 8, further comprising: a head portion capable of turning to the left and right and tilting; a stereoscopic image camera installed at the head portion, which is capable of stereoscopically observing a subject; a fire extinguisher; and a hose having a nozzle, which is installed at the head portion and jets a fire extinguishing agent from the fire extinguisher via the nozzle. Therefore, the robot apparatus checks a place, where a fire has broken out, by means of the stereoscopic image camera, turns the head portion to the place where a fire has broken out, and jets a fire extinguishing agent, such an advantageous effect can be brought about, by which a fire extinguishing operation can be carried out.

A robot apparatus according to Claim 10 is a robot apparatus according to any one of Claims 1 through 9, further comprising a photosensor for detecting obstacles in a predetermined range or an ultrasonic sensor for detecting an obstacles in a predetermined range. Therefore, such an advantageous effect can be brought about, by which, where any obstacle invades the predetermined range, for example, a suspicious person invades the predetermined range, the obstacle or suspicious person can be detected.

A robot remote control system according to Claim 11 comprises: a robot apparatus according to any one of Claim 1 through Claim 10; and an operation device for remotely controlling the robot apparatus, wherein the operation device includes: means for judging that the set mode is an autonomous mode or an autonomous/remote collaboration mode; means for judging the collaboration ratio in a case of the autonomous/remote collaboration mode; and means for transmittingmode data showing the judgedmode and collaboration ratio data showing the judged collaboration ratio along with the operation data. Therefore, such an advantageous effect can be brought about, by which a predetermined operation mode can easily be set in the robot apparatus.

A robot remote control system according to Claim 12 comprises: a robot apparatus according to any one of Claim 1 through Claim 10; and an operation device for remotely controlling the robot apparatus, wherein the operation device includes a stereoscopic image reproducing unit for reproducing a stereoscopic image, and an operation portion for displaying the status of the robot apparatus; the stereoscopic image reproducing unit includes means for receiving left and right image data transmitted from the robot apparatus, and means for displaying the received left and right image data as a stereoscopic image; and the operation portion includes means for receiving status data from the robot apparatus and means for displaying the received status data. Therefore, such an advantageous effect can be brought about, by which it is possible to stereoscopically display a received image, at the same time, it is possible to monitor the status of the robot apparatus, and it is possible to carry out remote control based on the received image.

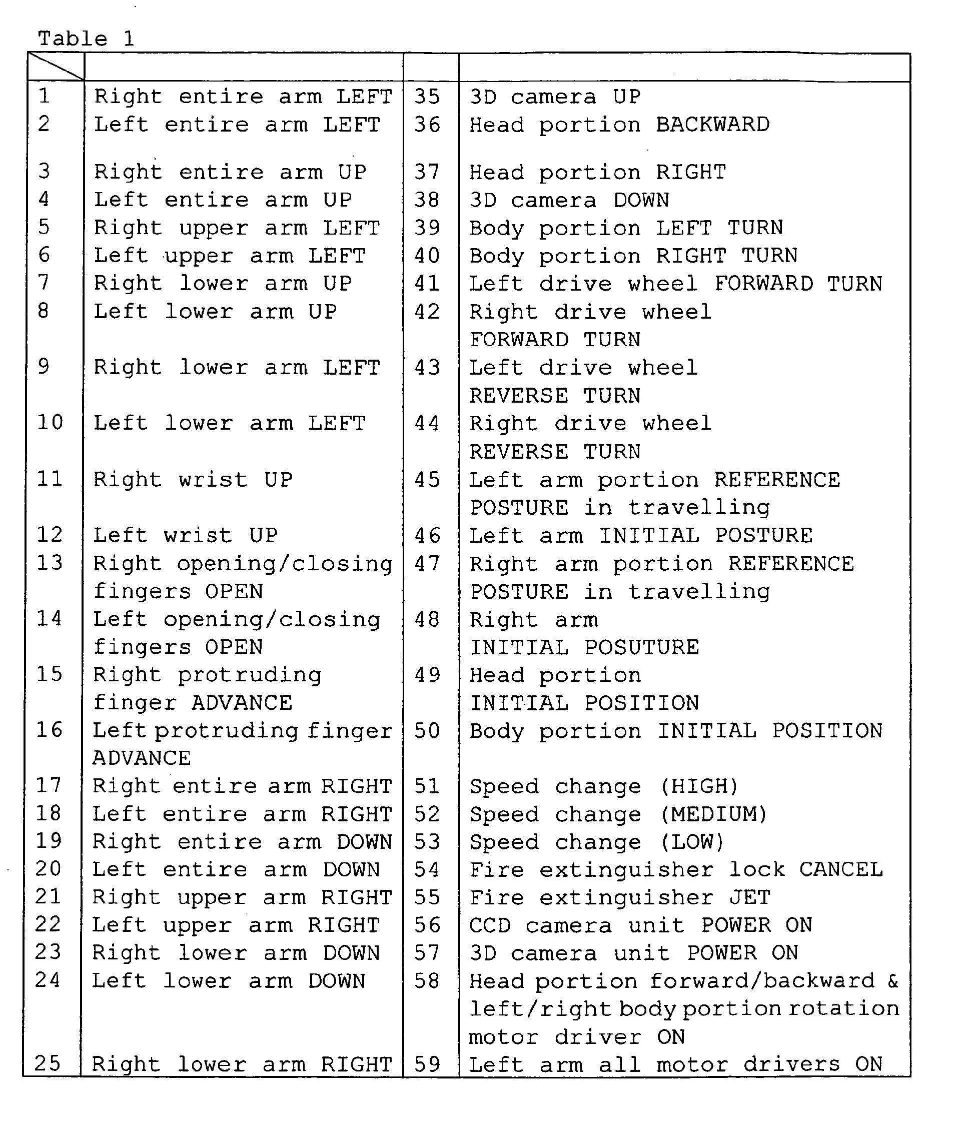

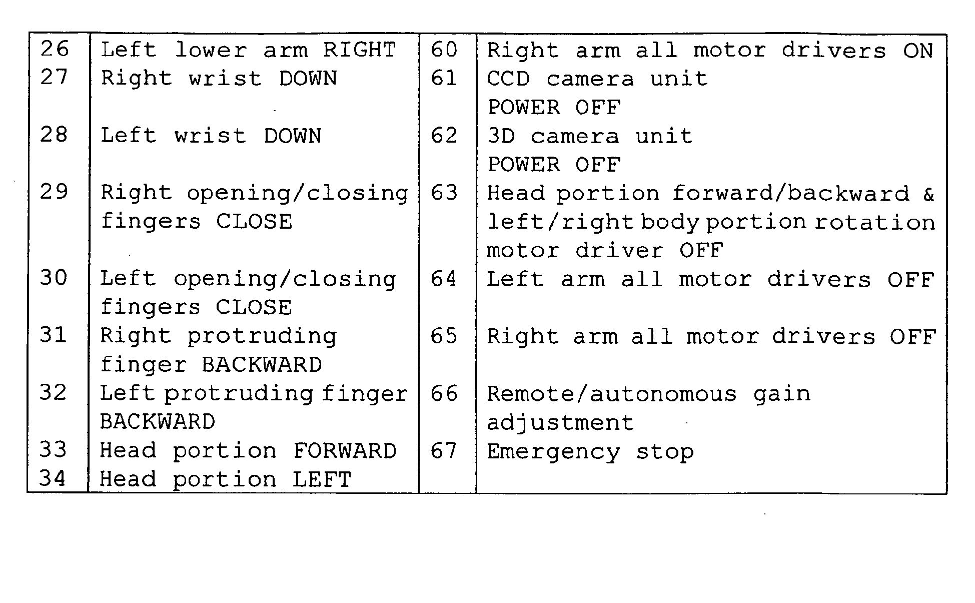

**Table 2**

| Portion | | Use | Quantity | | Remarks |
|---|---|---|---|---|---|
| Head portion motor | 1 | For 3D camera UP and DOWN | | 1 | Stepping motor |
| | 2 | For head portion UP and DOWN | | 1 | Stepping motor |
| | 3 | For head portion Left and right | | 1 | Stepping motor |
| Arm portion motor | 4, 5 | Entire arm UP and DOWN | x 2 (for Left and right) | 2 | Stepping motor |
| | 6, 7 | Entire arm Left and right | x 2 (for Left and right) | 2 | Stepping motor |
| | 8, 9 | Upper arm Left and right | x 2 (for Left and right) | 2 | Stepping motor |
| | 10,11 | Lower arm UP and DOWN | x 2 (for Left and right) | 2 | Stepping motor |
| | 12,13 | Wrist Left and right | x 2 (for Left and right) | 2 | Stepping motor |
| | 14,15 | Wrist UP and DOWN | x 2 (for Left and right) | 2 | Stepping motor |
| | 16,17 | Opening/closing fingers OPEN and DOWN | x 2 (for Left and right) | 2 | Stepping motor |
| | 18, 19 | Protruding fingers ADVANCE and RETREAT | x 2 (for Left and right) | 2 | Stepping motor |
| Body portion motor | 20 | Body portion TURN | | 1 | |
| Travelling portion motor | 21,22 | For driving left and right wheels | x 2 (for Left and right) | 2 | DC motor |

## Claims

1. A robot apparatus comprising: means for judging an autonomous mode or an autonomous/remote collaboration mode; means for executing an autonomous motion when the mode judging means judges said autonomous mode; means for judging a of collaboration ratio when the mode judging means judges said autonomous/remote collaboration mode; means for carrying out complete remote motion when the judged collaboration ratio is 100%; and means for executing autonomous/remote collaboration motion when the judged collaboration ratio is not 100%.

2. The robot apparatus according to Claim 1, further comprising: means for judging autonomous reset by which the mode is automatically shifted to an autonomous motion when said complete remote motion is terminated without any abnormality; and means for judging termination by which the mode is automatically shifted to an autonomous motion when said autonomous/remote collaboration motion is terminated.

3. The robot apparatus according to Claim 1 or 2, wherein the autonomous motion executing means includes: means for reading an instruction; means for calculating the present coordinates; means for comparing the read instruction coordinates with the calculated present coordinates; coordinate-shifting means for controlling so that the read instruction coordinates are made coincident with the calculated present coordinates; and means for executing the read instruction.

4. The robot apparatus according to Claim 3, wherein the instruction executing means includes: means for judging, on the basis of recognition of the image of a photographed subject, whether or not the photographed subject is a target subject; and means for calculating the distance to the target subject.

5. The robot apparatus according to any one of Claims 1 through 4, further comprising a leg portion by which forward/backward motion and left/right turning are carried out.

6. The robot apparatus according to any one of Claims 1 through 5, further comprising left and right arm portions having a plurality of degrees of freedom.

7. The robot apparatus according to Claim 6, wherein the arm portions are provided with protruding fingers that can press a target such as a pushbutton.

8. The robot apparatus according to Claim 6 or 7, wherein the arm portions are provided with opening and closing fingers that can be freely opened and closed.

9. The robot apparatus according to any one of Claims 1 through 8, further comprising: a head portion capable of turning to the left and right and tilting; a stereoscopic image camera installed at the head portion, which is capable of stereoscopically observing a subject; a fire extinguisher; and a hose having a nozzle, which is disposed at the head portion and jets a fire extinguishing agent from the fire extinguisher via the nozzle.

10. The robot apparatus according to any one of Claims 1 through 9, further comprising a photosensor for detecting obstacles in a predetermined range or an ultrasonic sensor for detecting an obstacles in a predetermined range.

11. A robot remote control system comprising: a robot apparatus according to any one of Claims 1 through 10; and an operation device for remotely controlling the robot apparatus;
wherein said operation device includes: means for judging that the set mode is an autonomous mode or an autonomous/remote collaboration mode; means for judging the collaboration ratio in a case of the autonomous/remote collaboration mode; and means for transmitting mode data showing the judged mode and collaboration ratio data showing the judged collaboration ratio along with the operation data.

12. The robot remote control system comprising: a robot apparatus according to any one of Claims 1 through 10; and an operation device for remotely controlling the robot apparatus;
wherein said operation device includes a stereoscopic image reproducing unit for reproducing a stereoscopic image, and an operation portion for displaying the status of said robot apparatus; said stereoscopic image reproducing unit includes means for receiving left and right image data transmitted from said robot apparatus, and means for displaying the received left and right image data as a stereoscopic image; and said operation portion includes means for receiving status data from said robot apparatus andmeans for displaying the received status data.
